(19) Europäisches Patentamt
European Patent Office
Office européen des brevets

(11) **EP 3 095 202 B1**

(12) **EUROPEAN PATENT SPECIFICATION**

(45) Date of publication and mention
of the grant of the patent:
**30.09.2020 Bulletin 2020/40**

(51) Int Cl.:
**H04B 7/04** *(2017.01)* **H04L 5/00** *(2006.01)*

(21) Application number: **15737365.5**

(86) International application number:
**PCT/SE2015/050028**

(22) Date of filing: **14.01.2015**

(87) International publication number:
**WO 2015/108476 (23.07.2015 Gazette 2015/29)**

(54) **REQUIREMENT LEVELS IN ADVANCED ANTENNA SYSTEM**

ANFORDERUNGSEBENEN IN ERWEITERTEM ANTENNENSYSTEM

NIVEAUX D'EXIGENCE DANS UN SYSTÈME D'ANTENNES AVANCÉ (AAS)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.01.2014 US 201461928487 P**

(43) Date of publication of application:
**23.11.2016 Bulletin 2016/47**

(73) Proprietor: **Telefonaktiebolaget LM Ericsson (publ)**
**164 83 Stockholm (SE)**

(72) Inventors:
• **SIENKIEWICZ, Esther**
**Ottawa, Ontario KIYIE8 (CA)**
• **ELFSTRÖM, Torbjörn**
**S-439 74 Fjärås (SE)**
• **CHAPMAN, Thomas**
**SE-171 50 Solna (SE)**

(74) Representative: **Ericsson**
**Patent Development**
**Torshamnsgatan 21-23**
**164 80 Stockholm (SE)**

(56) References cited:
• HUAWEI: "Further consideration of the virtual transceiver for AAS BS", 3GPP DRAFT; R4-133714 [AAS] FURTHER CONSIDERATION OF VIRTUAL TRANSMITTER AND RECEIVER, 3RD GENERATION PARTNERSHIP PROJECT (3GPP), MOBILE COMPETENCE CENTRE ; 650, ROUTE DES LUCIOLES ; F-06921 SOPHIA-AN , vol. RAN WG4, no. Barcelona, Spain; 20130819 - 20130823 12 August 2013 (2013-08-12), XP050721353, Retrieved from the Internet: URL:http://www.3gpp.org/ftp/tsg_ran/WG4_Ra dio/TSGR4_68/Docs/ [retrieved on 2013-08-12]
• HUAWEI: "AAS Ad hoc", 3GPP DRAFT; R4-133089 RAN4#67 AAS AD HOC MEETING MINUTES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Fukuoka, Japan; 20130520 - 20130524 27 May 2013 (2013-05-27), XP050703244, Retrieved from the Internet: URL:http://www.3gpp.org/ftp/tsg_ran/WG4_Ra dio/TSGR4_67/Docs/ [retrieved on 2013-05-27]
• HUAWEI: 'Further consideration of the virtual transceiver for AAS BS;' 3RD GENERATION PARTNERSHIP PROJECT (3GPP); R4-133714, XP050721353
• ERICSSON: '3rd Generation Partnership Project (3GPP); R4-135283' DEFINING BEAMS FOR RADIATED TX POWER AND RX SENSITIVITY ACCURACY REQUIREMENTS; 07 October 2013, XP050720800

- '3rd Generation Partnership Project (3GPP); R4-136468' AAS TRANSMISSION: SUMMARY OF THE CORE AND CONFORMANCE TESTING REQUIREMENTS; 12 November 2013, XP050739410

- 'Proposals for specific conducted requirements' ;3RD GENERATION PARTNERSHIP PROJECT (3GPP); R4-140875 09 February 2014, XP050740520

**Description**

TECHNICAL FIELD

Embodiments herein relate to a node and methods therein for meeting a MIMO requirement of a base station with multiple transceivers.

BACKGROUND

In a typical radio communications network, communication devices, also known as mobile stations and/or user equipments (UEs), communicate via a Radio Access Network (RAN) to one or more core networks. The radio access network covers a geographical area which is divided into cell areas, with each cell area being served by a base station, e.g., a radio base station (RBS), which in some networks may also be called, for example, a "NodeB" or "eNodeB". A cell is a geographical area where radio coverage is provided by the radio base station at a base station site or an antenna site in case the antenna and the radio base station are not collocated. Each cell is identified by an identity within the local radio area, which is broadcast in the cell. Another identity identifying the cell uniquely in the whole mobile network is also broadcasted in the cell. One base station may have one or more cells. A cell may be downlink and/or uplink cell. The base stations communicate over the air interface operating on radio frequencies with the user equipments within range of the base stations.

A Universal Mobile Telecommunications System (UMTS) is a third generation mobile communication system, which evolved from the second generation (2G) Global System for Mobile Communications (GSM). The UMTS terrestrial radio access network (UTRAN) is essentially a RAN using wideband code division multiple access (WCDMA) and/or High Speed Packet Access (HSPA) for user equipments. In a forum known as the Third Generation Partnership Project (3GPP), telecommunications suppliers propose and agree upon standards for third generation networks and UTRAN specifically, and investigate enhanced data rate and radio capacity. In some versions of the RAN as e.g. in UMTS, several base stations may be connected, e.g., by landlines or microwave, to a controller node, such as a radio network controller (RNC) or a base station controller (BSC), which supervises and coordinates various activities of the plural base stations connected thereto. The RNCs are typically connected to one or more core networks.

Specifications for the Evolved Packet System (EPS) have been completed within the 3rd Generation Partnership Project (3GPP) and this work continues in the coming 3GPP releases. The EPS comprises the Evolved Universal Terrestrial Radio Access Network (E-UTRAN), also known as the Long Term Evolution (LTE) radio access, and the Evolved Packet Core (EPC), also known as System Architecture Evolution (SAE) core network. E-UTRAN/LTE is a variant of a 3GPP radio access technology wherein the radio base station nodes are directly connected to the EPC core network rather than to RNCs. In general, in E-UTRAN/LTE the functions of a RNC are distributed between the radio base stations nodes, e.g. eNodeBs in LTE, and the core network. As such, the Radio Access Network (RAN) of an EPS has an essentially "flat" architecture comprising radio base station nodes without reporting to RNCs.

So-called Active Antenna System (AAS) Base stations, sometimes also referred to as Advanced Antenna System Base stations, have become a topic of increasing interest in recent years. An AAS base station may have one or both of the following characteristics:

- It integrates some or all of the electronic components of the Radio Frequency (RF) transceiver with an antenna unit.
- It possesses multiple transceiver chains and is able to perform electronic beamforming, i.e. directing, on transmit and receive signals.

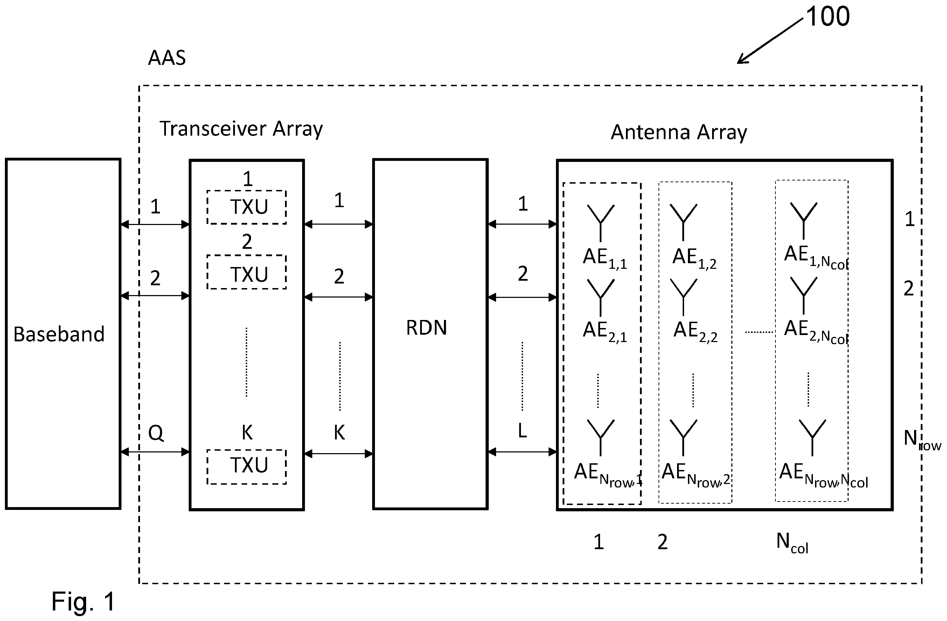

A reference architecture for an AAS base station is shown in Figure 1. The reference architecture comprises a number of components:

- An array of Antenna Elements (AE) called antenna array. There exist a number of potential physical arrangements for an antenna array, which include, but are not limited to, uniform linear, matrix and circular. Typically, cross polarized arrangements are deployed with an antenna element for each polarization. In Figure 1 each AE is identified with two indices in subscript, $A_{row,col}$. The first index denotes the row of the AE and the second index denotes the column of the AE.
- A so-called "Radio Distribution Network" (RDN), which is responsible for routing of RF signals between each transceiver output and one or more antennas. An RDN may be as simple as a direct coupling from each transceiver to each antenna. On the other hand, an RDN may be a complex network of feeders and filters, with each transceiver driving multiple antenna elements.
- An array of radio transceivers (TXU) called transceiver array. Transceivers comprise transmit chains, with typical components such as filters, mixers, Power Amplifiers (PA) etc. and receive chains, with typical components such as filtering, Low Noise Amplifiers (LNAs) etc. Note that the number of transmitters may not be equal to the number of receivers.

- A baseband processing unit.

Beamforming may be performed at various places within the architecture. For example, beamforming may be performed in a baseband, or may be performed as part of the transceivers, or the RDN may implement analogue beamforming.

There may be several approaches to beamforming, depending on the type of base station architecture and the intended application. Broadly speaking, beamforming types may be split into two specific categories, cell specific beamforming and user specific beamforming.

Cell specific beamforming is beamforming that is performed on signals that are common to all UEs, in order to impact the footprint of a cell. Examples of applications of cell specific beamforming include variable electronic down tilt, in which the cell specific beam is steered in the vertical domain in order to impact the cell coverage and cell splitting, in which two cell specific beams are created with different steering angles in the horizontal and/or vertical domains, in order to add additional cells to the base station coverage area and increase capacity.

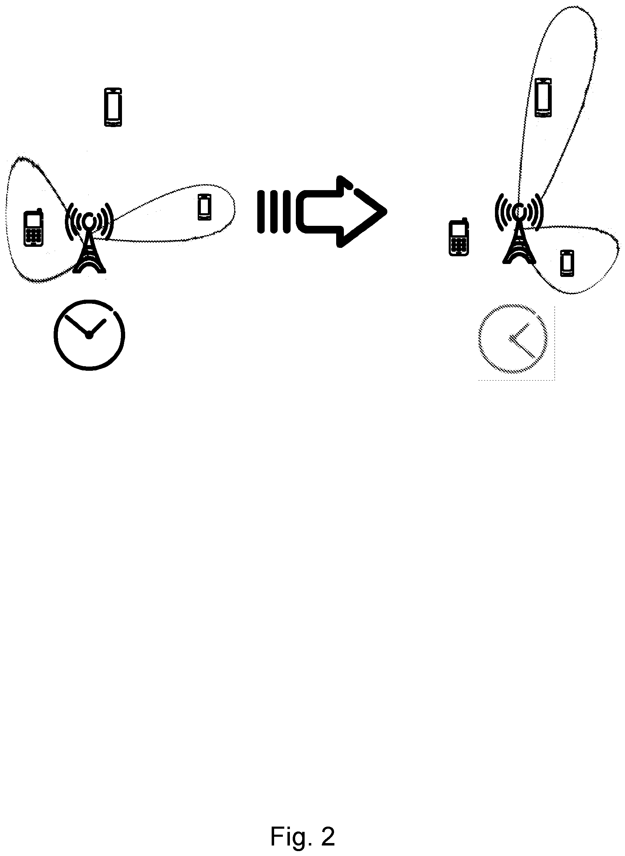

User specific beamforming is beamforming that is applied to resources that are momentarily scheduled to a specific user equipment, but not to other resources. With user specific beamforming, cell related signals such as common reference symbols or common channels are not subjected to beamforming. Along with a signal carrying data, a beamformed user specific signal may carry also a user specific reference signal to simplify demodulation at the user equipment. For user specific beam forming, beams that are created are dynamic and have the ability to change element weights to steer the beam towards another group of user equipment. This is schematically illustrated in **Figure 2,** where the user specific beams have changed for two different times of the day.

AAS base stations are advantageous compared with conventional base stations for several reasons. Firstly, the building practice of integrating antennas and radio eliminates sources of losses that arise in conventional base stations, such as cable related losses and hence increases the power efficiency of the base station. Integration of radio and antenna also significantly simplifies deployment. Secondly, the ability to perform electronic beamforming enables base stations to offer greater flexibility and adaptability in order to enhance network performance; for example by means of varying the amount of down tilt according to load conditions. Thirdly, advanced forms of beamforming may provide capacity gains and user equipment gains, e.g. in the form of Multiple-Input Multiple-Output (MIMO).

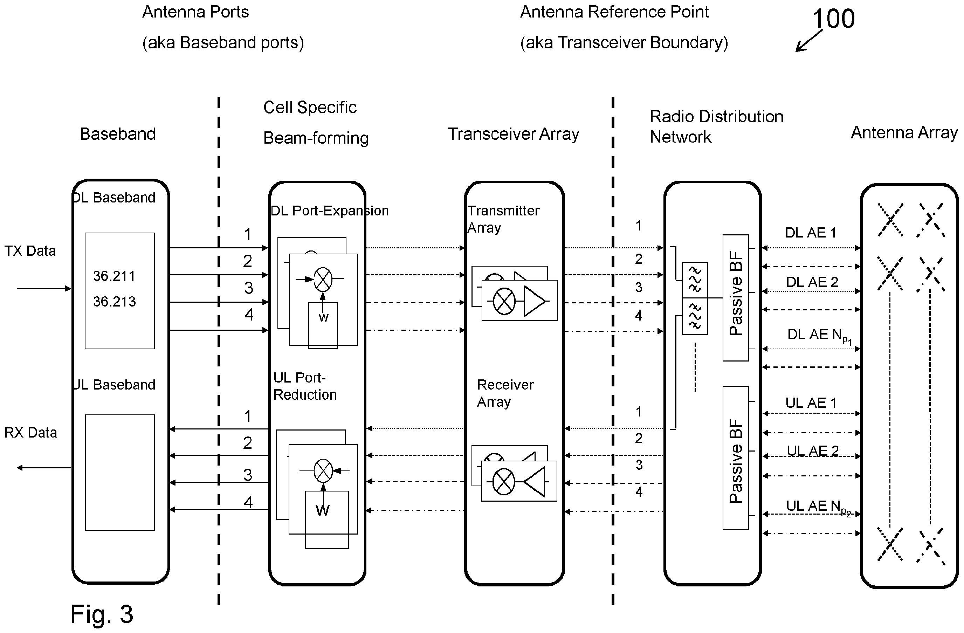

MIMO systems were first introduced into 3GPP in Release 7 version of HighSpeed Downlink Packet Access (HSDPA). Later, LTE was developed with MIMO as a key component. Grouping multiple transceiver chains or using an array of antennas to concentrate energy in one or more given directions via pre-coding or beamforming to produce a user specific or cell specific beam is termed as a MIMO branch, or MIMO layer or special layer. Other alternative terminologies may also be used in the future. Using **Figure 3** as an example, there are four MIMO branches. In Figure 3 a line corresponding to a MIMO branch is recognizable from the other lines corresponding to other MIMO branches by the way that the line is dashed. A first MIMO group is illustrated by dotted lines, a second MIMO group is illustrated by dense dashed lines, a third MIMO group by sparse dashed lines, while a fourth MIMO group is illustrated by dash-dotted lines. All MIMO branches consist of several transceiver arrays and antenna elements. In some literature, these MIMO branches are also referred to as cell specific beams. In Figure 3 UL AE 1 refers to uplink antenna element 1, while DL AE 1 refers to downlink antenna element 1. $N_{p1}$ refers to the number of antenna elements used for downlink, while $N_{p2}$ refers to the number of antenna elements used for uplink.

AAS implementations and applications may vary significantly according to the type of product and the goals of the vendor and operator.

Traditionally, base stations possess a single transmitter chain, per MIMO branch, that is connected to a passive antenna system. The base station transceivers and antennas may be developed and sold separately. 3GPP sets RF performance requirements on parameters such as output power accuracy, emissions, transmitter signal quality, receiver sensitivity etc. that relate to the transmitter part of the base station. The requirements are set at the base station antenna connector. The performance of passive antenna systems is not subject to 3GPP requirements. However an antenna vendor may supply parameters of the antenna system, e.g. gain, directivity, radiation pattern, accuracy etc., and the transmitter and antenna system may be treated as independent units, such that parameters that relate to the combined performance of antenna and transceiver, e.g. Equivalent Isotropic Radiated Power (EIRP) can be calculated by combining the requirement level at the base station and antenna parameters.

AAS base stations integrate antenna and radio. However, for AAS systems it is not necessarily the case that it is possible to estimate radiated RF performance requirements by combining transceiver requirement levels and antenna parameters. Instead, 3GPP has recently decided that some requirements need to be set on radiated performance of the AAS base station; e.g. EIRP and Equivalent Isotropic Receiver Sensitivity (EIRS).

AAS base stations have a possibility of a large antenna array and also a possibility of all the electronic transceiver components integrated directly to the antenna system. These two factors lend well to the need of radiated testing. Setting requirements Over The Air (OTA) in the far-field region, for example measuring the radiated output power generated by a base station is defined as radiated field-strength measured outside the base station in the far-field region.

Although some requirements will be set as radiated requirements in 3GPP release 12, other requirements will still be specified in 3GPP as conducted requirements. The radiated requirements relate to the radiated emission of RF signals, while the conducted requirements relate to conducted RF signals in the base station and do not include effects from the antenna. Conducted requirements may relate to measurements of RF signals at antenna connectors. Examples of requirements that may be specified as conducted requirements include, but are not limited to, spurious emissions, conducted Transmitter (TX) power, Adjacent Channel Leakage Ratio (ACLR), Error Vector Measure (EVM), receiver sensitivity.

Using the EVM requirement as an example measures the quality of the transmitted signal across all the Radio Blocks (RB). In order to establish this, the measurement is taken at each antenna port at the base station. Therefore the requirement is set per an antenna port. The maximum output power requirement is stated per transceiver chain in traditional base stations. These are two examples of requirements which are defined per antenna connector and can be mapped to an AAS requirement.

In the current 3GPP specifications, requirements are set as conducted requirements and defined per an antenna connector. In the existing specification paradigm, an antenna connector relates to a MIMO branch. Where there are multiple MIMO branches, the same requirements apply at each branch.

Huawei: "Further consideration of the virtual transceiver for AAS BS", 3GPP draft R4-133714, vol. RAN WG4, 12.08.2013, introduces the concept of a "virtual transceiver" in the context of an AAS base station. Each such virtual transceiver consists of a plurality of physical transceivers each with a connector to a single one of a pool of cross-polarized antenna elements, the number and composition of virtual transceivers depending on the desired configuration. The virtual transmitters are further grouped depending on the configuration, such that the virtual transmitters in each group are constituted by the same set of physical transceivers. All virtual transceivers in the different configurations are expected to meet the existing RF requirements specified for each antenna connector.

Huawei: "AAS Ad hoc", 3GPP draft R4-133089, vol. RAN WG4, 27.05.2013, defines the AAS base station requirement as the sum of the spurious emissions within one virtual transmitter having multiple physical transmitters, said combined requirement being aligned with the existing requirement for a single physical transmitter in a legacy BS.

With the emergence of AAS base stations, although 3GPP will specify some radiated requirements, there will still be a need to define conducted requirements based at antenna connectors.

SUMMARY

The invention is defined by the independent claims. Preferred embodiments are defined in the dependent claims. Aspects or embodiments which are disclosed herein and which are not covered by the appended claims are useful for understanding the invention.

Thus for some requirements, there is a need to define a new method for allocating requirements between transceivers, as the existing solution of applying the same per MIMO branch requirement to each transmitter, as is done for single transceiver base stations would not work. Thus, an object of embodiments herein is to provide a mechanism that provides requirements to a base station in an efficient manner.

According to a first aspect of embodiments herein, the object is achieved by a method in a node for achieving Radio Frequency, RF, requirement levels across a set of RF transceivers of a base station. The set of RF transceivers generates one or more Multiple-Input Multiple-Output, MIMO, branches.

The node groups the one or more MIMO branches into groups of MIMO branches, wherein the one or more MIMO branches in each group of MIMO branches are generated from the same set of RF transceivers.

The node generates a combined requirement level by combining a per MIMO branch RF requirement level for the MIMO branches in the group of MIMO branches using a combining function.

The node distributes the combined requirement level into a respective individual RF requirement level for each of the respective RF transceivers according to a distribution function.

According to a second aspect of embodiments herein, the object is achieved by a node for achieving Radio Frequency, RF, requirement levels across a set of RF transceivers of a base station. The set of RF transceivers is configured to generate one or more Multiple-Input Multiple-Output, MIMO, branches.

The node is configured to group the one or more MIMO branches into groups of MIMO branches. The same set of RF transceivers is configured to generate the one or more MIMO branches in each group of MIMO branches.

The node is configured to generate a combined requirement level by combining a per MIMO branch RF requirement level for the MIMO branches in the group of MIMO branches using a combining function.

The node is configured to distribute the combined requirement level into a respective individual RF requirement level for each of the respective RF transceivers according to a distribution function.

Since the node distributes the combined requirement level into the respective individual RF requirement level for each of the respective RF transceivers the RF requirements for the base station comprising the set of RF transceivers is related to existing RF requirements for a single transceiver base station. This means that the requirements to the AAS base station are provided in an efficient manner.

An advantage with embodiments herein is that they provide a means to relate conducted RF requirements for an AAS base station to the existing conducted RF requirements specification for a single transceiver base station. This means that that the existing conducted requirement levels may be re-used, which avoids the need to define new requirements and that base station performance remains consistent.

BRIEF DESCRIPTION OF THE DRAWINGS

Examples of embodiments herein are described in more detail with reference to attached drawings in which:

Figure 1    is a schematic block diagram illustrating a reference architecture for an AAS base station.
Figure 2    illustrates UE specific beamforming.
Figure 3    illustrates further details of an AAS base station reference architecture.

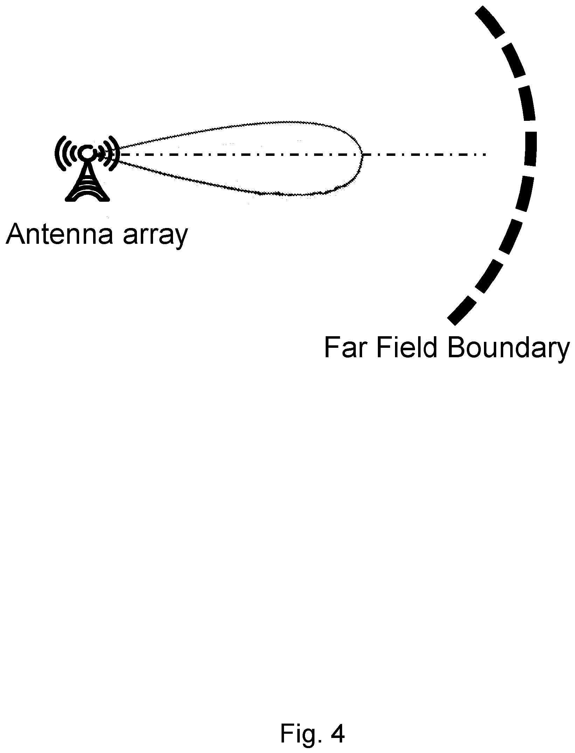

Figure 4    illustrates the far field of an electromagnetic emission from an antenna array.
Figure 5    is a schematic block diagram illustrating embodiments of a wireless communication networks.
Figure 6    is a flowchart illustrating embodiments of a method in a node.
Figure 7    illustrates further details of an AAS base station reference architecture.
Figure 8    illustrates a first configuration of beam forming with MIMO based on two groups of MIMO branches.
Figure 9    illustrates a second configuration of beam forming with MIMO based on two groups of MIMO branches.
Figure 10   is a schematic block diagram illustrating embodiments of a node.

DETAILED DESCRIPTION

As part of developing embodiments herein, a problem will first be identified and discussed. LTE will be used as an example of a wireless communications network in which the problem may arise.

In the case of an AAS base station, each MIMO branch will be driven by multiple transceivers. It is clear that for some configurations of multiple transceivers in the AAS base station each transceiver should not be subject to the total MIMO branch requirement. If this were to be the case, then, for example with a large number of transceivers the total amount of spurious emissions would be very high. Furthermore, it may not be practical to provide antenna connectors at every transceiver such that the output of all transceivers may be measured.

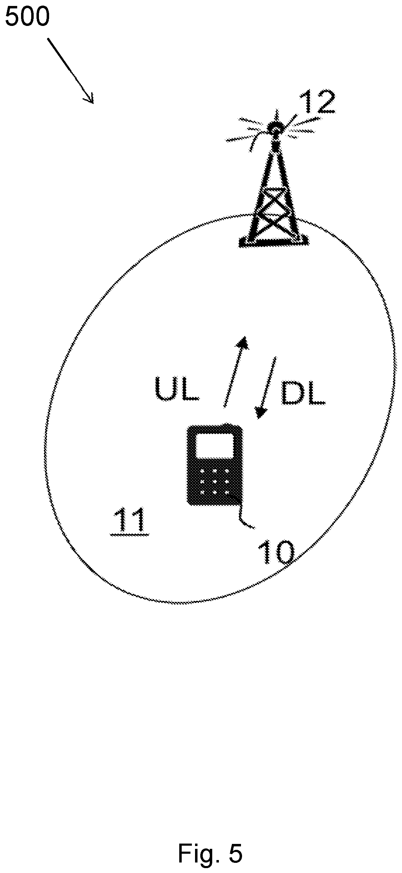

Embodiments herein relate to wireless communication networks in general. **Figure 5** is a schematic overview depicting **a wireless communication network 500** in which embodiments herein may be implemented. The wireless communication network 500 may also be referred to as a radio communications network, a telecommunications network or similar. The wireless communication network comprises one or more Radio Access Networks (RAN) and one or more Core Networks (CN). The wireless communication network may use a number of different technologies, such as Long Term Evolution (LTE), LTE-Advanced, Wideband Code Division Multiple Access (WCDMA), Global System for Mobile communications/Enhanced Data rate for GSM Evolution (GSM/EDGE), Worldwide Interoperability for Microwave Access (WiMax), or Ultra Mobile Broadband (UMB), just to mention a few possible implementations. The wireless communication network 500 is exemplified herein as an LTE network.

In the wireless communication network 500, **a communication device 10,** also known as a mobile station, wireless device, a user equipment and/or a wireless terminal, communicates via a RAN to one or more CN. It should be understood by the skilled in the art that "communication device" is a non-limiting term which means any wireless terminal, user equipment, Machine Type Communication (MTC) device, a Device to Device (D2D) terminal, or node e.g. Personal Digital Assistant (PDA), laptop, mobile, sensor, relay, mobile tablets or even a small base station communicating within respective cell.

The wireless communication network covers a geographical area which is divided into cell areas, e.g. **a cell 11** being served by **a base station 12.** The base station 12 may also be referred to as a radio base station and e.g. a NodeB, an evolved Node B (eNB, eNode B), a base transceiver station, Access Point Base Station, base station router, or any other network unit capable of communicating with the communication device 10 within the cell 11 served by the base station 12 depending e.g. on the radio access technology and terminology used. The base station 12 has multiple transceivers and may serve one or more cells, such as the cell 11.

A cell is a geographical area where radio coverage is provided by radio base station equipment at a base station site or at remote locations in Remote Radio Units (RRU). The cell definition may also incorporate frequency bands and radio access technology used for transmissions, which means that two different cells may cover the same geographical area but using different frequency bands. Each cell is identified by an identity within the local radio area, which is broadcast in the cell. Another identity identifying the cell 11 uniquely in the whole wireless communication network is also broadcasted in the cell 11. The base station 12 communicates over the air or radio interface operating on radio frequencies with the communication device 10 within range of the base station 12. The communication device 10 transmits data over the radio interface to the base station 12 in Uplink (UL) transmissions and the base station 12 transmits data over an air or radio interface to the communication device 10 in Downlink (DL) transmissions.

It should be noted that the following embodiments are not mutually exclusive. Components from one embodiment may be tacitly assumed to be present in another embodiment and it will be obvious to a person skilled in the art how those components may be used in the other exemplary embodiments.

RF requirements, i.e. requirements relating to an RF signal, are defined today at the antenna port connector, for a base station with a single RF transceiver. Embodiments herein disclose e.g. a combination function or a power weighted summation, or a selection function that help to equate the current RF requirement to an AAS base station requirement, i.e. an RF requirement for the AAS base station.

The aim of embodiments herein is to capture a method for achieving conformance to the existing RF requirements, e.g. a method in a conformance test specification for demonstrating conformance to the existing RF requirements. The goal is a method for demonstrating that a base station with multiple transceivers, such as the base station 12, can meet requirements defined for a Base Station (BS) with a single transceiver. The existing RF requirement, published in 3GPP TS 25.104 version 12.2.0, TS 36.104 version 12.2.0 and TS 37.104 version 12.2.0, is a single RF transceiver BS requirement, i.e. an RF requirement used for a BS with a single RF transceiver. However, this method would also be used by the skilled person trying to show compliance with 3GPP specifications of a multiple transceiver base station.

Embodiments herein provide a means to relate conducted RF requirements for an AAS base station to the existing conducted RF requirements specification for a single transceiver base station. The advantages are then that the existing conducted requirement levels can be re-used, which avoids the need to define new requirements and that base station performance remains consistent.

A method is disclosed herein for operating transceivers of a base station RF whereby the outputs of the individual transceivers enable meeting combined requirements of a set of MIMO branches that are generated by means of beamforming using multiple transceivers.

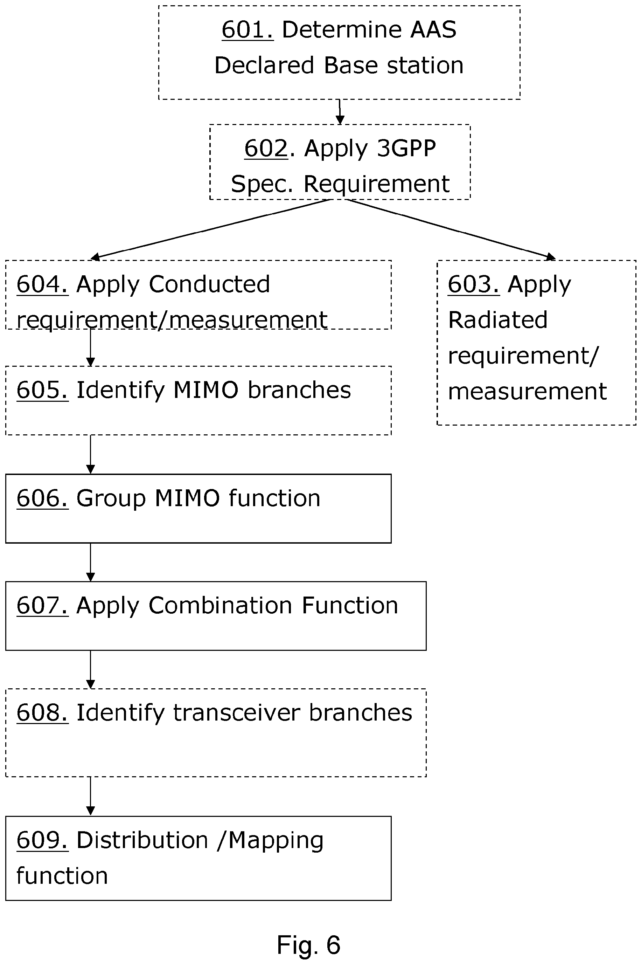

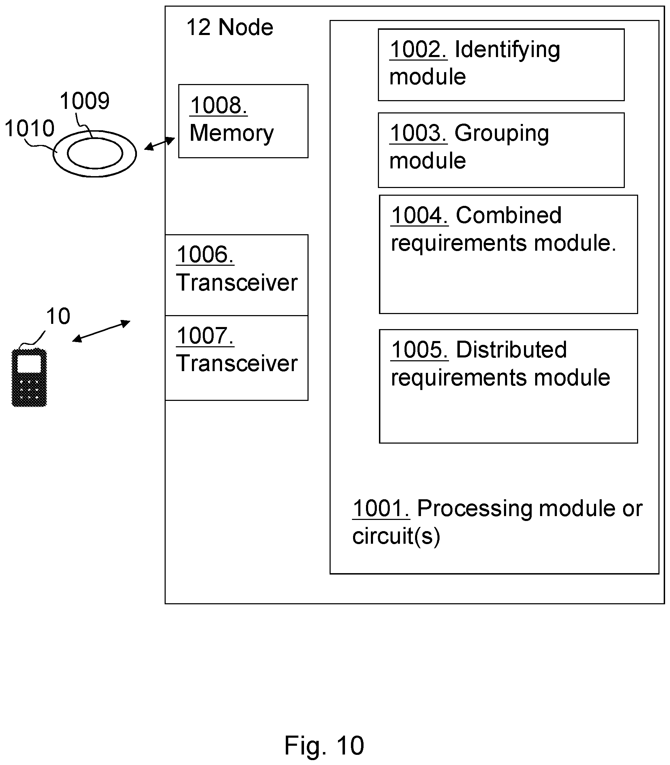

**Figure 6** is a flowchart and shows a method in a node, such as the base station 12 or a test equipment or in a combination, e.g. in an arrangement, for e.g. setting up requirements for communication in the radio communications network 500 according to embodiments herein. In other words, Figure 6 shows a method in a node for achieving Radio Frequency, RF, requirement levels across a set of **RF transceivers 1006, 1007** of a base station 12 depicted in Figure 10 described below, wherein the set of RF transceivers 1006, 1007 generates one or more Multiple-Input Multiple-Output, MIMO, branches or MIMO layers or special layers. The method may be used for operating RF transceivers in the base station 12 whereby the outputs of the individual RF transceivers meets the combined requirements of a set of MIMO branches that are generated by means of beamforming using multiple RF transceivers. The beamforming may be achieved by RF transceivers 1006, 1007 or a set of RF transceivers 1006, 1007 for beamforming. The transceivers may each comprise a transmitter and a receiver.

The requirement level may relate to any one or more out of: a spurious emissions requirement, a transmitter power requirement, a receiver sensitivity requirement, an Adjacent Channel Leakage Ratio, ACLR, requirement, an Error Vector Measure, EVM, requirement, a frequency accuracy requirement.

The requirement level may further relate to unwanted emission close the carrier.

In some embodiments a beam of transmit signals generated by the group of MIMO branches is a cell wide beam and/or comprise a common pilot or reference symbol.

In some other embodiments the beam of transmit signals generated by the group of MIMO branches is a user equipment specific beam and/or comprise a common pilot or reference symbol.

## Action 601

The method may comprise determining that the base station 12 is a base station with multiple RF transceivers. This may be declared, manually input, configured or detected.

## Action 602

The node applies a 3GPP specification requirement, e.g. xx.104 a single transceiver BS requirement.

## Action 603

In some circumstances, the 3GPP specifications requirement applied to the node may be a radiated RF requirement, i.e. an RF requirement on the radiation characteristics of an emitted RF signal. The node, such as the base station 12, applies the RF requirement.

**Action 604**

In other circumstances, the 3GPP specification requirement applied to the node may be conducted. I.e. the requirement relates to measurements of RF signals in the base station, such as the base station 12. In some embodiments the measurements are measurements at antenna connectors. The node, such as the base station 12, applies the RF requirement. The actions 604-609 relate to embodiments described herein.

**Action 605**

MIMO branches generated by the node, such as the base station 12, are identified.

In other words, the node identifies the MIMO branches. The identifying may be associated to an antenna port mapping, where antenna ports are mapped to radio signals. This process may be expressed as a Sradio = W*Sbb, where W is a mapping matrix, or in other words a weighting and distribution/combining matrix. Sradio are the signals at each of the transceivers, and Sbb are the signals at each of the baseband ports. The structure of the mapping matrix may identify the MIMO branch.

This action may be performed by **a processing module 1001** or **a processing circuit 1001** comprised in the node. This action may further be performed by **an identifying module 1002,** comprised in the node depicted in Figure 10 described below.

**Action 606**

The identified MIMO branches are grouped such that in each group, all MIMO branches in the group are generated from the same set of transceivers by the node, such as the base station 12.

In other words, the node groups the one or more MIMO branches into groups of MIMO branches. The one or more MIMO branches in each group of MIMO branches are generated from the same set of RF transceivers 1006, 1007.

This action may be performed by **a grouping module 1003** comprised in the node depicted in Figure 10 described below.

**Action 607**

The existing per MIMO branch requirements for each of the MIMO branches in the group are combined using a combining function.

In other words, the node generates a combined requirement level by combining a per MIMO branch RF requirement level for the MIMO branches in the group of MIMO branches using a combining function.

The combining function may be any one or more out of: a summation of the requirement levels for each MIMO branch, an average of the requirement levels for each MIMO branch, a maximum or minimum of the requirement levels for each MIMO branch, and a weighted average of the requirement levels for each MIMO branch.

This action may be performed by **a module 1004** comprised in the node depicted in Figure 10 described below. The module 1004 is configured to configure and operate the RF transceivers to meet the combined requirement.

**Action 608**

The RF transceivers used by the node, such as the base station 12, that are responsible for generating all of the MIMO branches that are transmitted by the base station, are identified.

In other words, in this action the node identifies the RF transceivers 1006, 1007 generating the MIMO branches.

This action may be performed by the identifying module 1002 comprised in the node.

**Action 609**

The node operates its transceivers such that individual requirements on each of the transceivers, responsible for generating MIMO beams in the group, are met. The individual requirements are calculated using a distribution function, which is applied to the combined requirements identified in Action 607.

In other words, the node distributes the combined requirement level into a respective individual RF requirement level for each of the respective RF transceivers 1006, 1007 according to a distribution function.

In some embodiments the node operates the set of RF transceivers 1006, 1007 by causing the respective RF transceivers 1006, 1007 to at least meet the respective individual RF requirement level.

The distribution function may allocate the combined requirement level to the set of RF transceivers 1006, 1007 by performing any one or more out of:

- dividing the combined requirement level evenly between the respective RF transceivers 1006, 1007 and/or evenly between the respective RF transceivers 1006, 1007 according to the transmit power levels of the respective RF transceivers 1006, 1007,
- allocating the combined requirement level to each of the respective RF transceivers 1006, 1007, and
- requiring that the average or sum of the respective individual RF requirement level for each of the respective RF transceivers 1006, 1007 exceed the combined requirement level.

This action may be performed by **a module 1005** depicted in Figure 10 described below. The module 1005 is configured to configure the transceivers to meet the distributed requirements.

The actions of Figure 6 may be used both at a design time, to ensure that the requirements will be met before conformance testing, and also used again during the time when conformance testing is being performed. When the base station 12 is in operation it will be indirectly apply this method - since the BS will be working within the requirements.

These methods may be automated in a form of an algorithm or placed in a module for repeatability.

## Further details of embodiments

### AAS Architecture

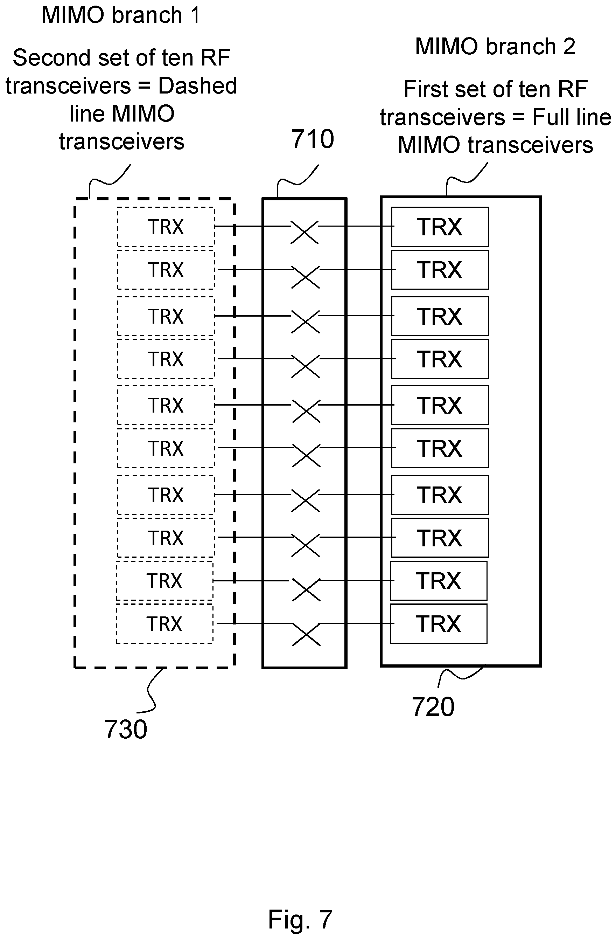

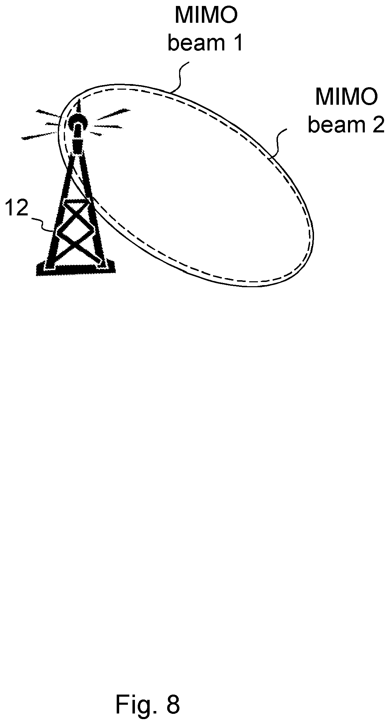

The embodiments herein will now be illustrated with two example AAS architectures or configurations. In a first example AAS architecture, twenty AAS transceivers drive **a twenty element cross polarized column 710.** For each polarization, there are ten antenna elements and ten RF transceivers, as depicted in **Figure 7.** Each polarization generates a MIMO branch that is visible to the communication device 10. The ten RF transceivers, **a first set of RF transceivers 720** and **a second set of RF transceivers 730,** responsible for each MIMO branch may be used for variable electronic tilt, as illustrated in **Figure 8.** In Figure 8, the full line MIMO beam is produced by the first set of RF transceivers and the dashed line MIMO beam, with the same coverage, is produced by the second set of RF transceivers. This configuration is called **a first configuration.**

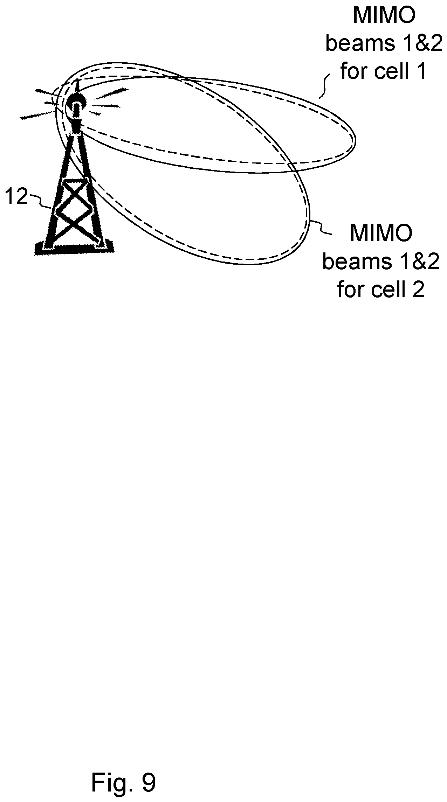

In a second example, the same physical configuration is used. However, now each polarization is used to generate two cell specific beams for the purposes of cell splitting. That is, two cells are formed, one by each emitted beam of RF signals. Therefore, each polarization produces two MIMO branches, a first MIMO branch and a second MIMO branch, one for each cell. This is illustrated in **Figure 9.** The full line MIMO beams 1 for each cell are produced by the right hand side transceivers and the dashed line MIMO beams 2 for each cell with the left hand side transceivers. This configuration is called **a second configuration.**

As mentioned above, the embodiments herein will now be further illustrated with the help of the two example configurations, first configuration and second configuration.

More specifically, embodiments targeting different RF requirements will be discussed and exemplified using the two configurations mentioned above.

### Transmit Spurious Emissions

In the current specifications, a spurious emissions requirement level is defined per MIMO branch.

In the first configuration, the first action, corresponding to action 606 above, is to group MIMO branches into groups that are generated with the same set of RF transceivers 1006, 1007. In this case, each of the two MIMO branches is generated with a different set of RF transceivers 1006, 1007; thus **a first group** of MIMO branches comprises the first MIMO branch 1 and **a second group** of MIMO branches comprises the second MIMO branch 2.

The second action, corresponding to action 607, is to combine the requirement levels for each MIMO branch 701, 702 in each group. In case of the first configuration there is no need for such a combining, since each group comprises only one MIMO branch.

The third action, corresponding to action 609, is to distribute in each group the requirement to each of the RF transceivers 1006, 1007 and meet the requirement at each transceiver. In order to meet the requirement at each transceiver the base station 12 may configure and operate its radios such that the processes in the radio that generate emissions do not cause the emissions limit to be exceeded. In this example, the requirement is distributed according to the transmit power of each transceiver. This may for example be implemented with the following mathematical formula:

$$S_i = S_{combined} * \frac{P_i}{\sum_{k=1}^{N} P_k}$$

where $S_i$ is the allowed spurious emissions level for the ith RF transceiver 1006, 1007 in the group, $S_{combined}$ is the combined spurious emissions requirement for all of the MIMO beams, i.e. branches, in the group, $P_i$ is the transmit power of the ith RF transceiver 1006, 1007 in the group and N is the number of RF transceivers 100, 1007 in the group. k is a summation parameter. $S_i$ equals the product of the combined spurious emissions requirement, $S_{combined}$ and the transmit power of the ith RF transceiver 1006, 1007 in the group divided by the sum of transmit powers of the RF transceivers 1006, 1007 in the group. Hence, the distributed combined requirement is used to determine a transmission parameter such as a transmission power, an unwanted spurious emissions or similar.

For the second configuration, the embodiments operate as follows.

In the first action, corresponding to action 606, MIMO branches are grouped according to which branches are generated from a common set of transceivers. In this case, MIMO branch 1 for cell 1 and MIMO branch 2 for cell 2 are generated on the same polarization using the same set of transceivers. In this case, therefore, MIMO branch 1 for cell 1 and MIMO branch 1 for cell 2 belong to a first group. Similarly, MIMO branch 2 for cell 1 and MIMO branch 2 for cell 2 belong to a second group.

In the next action, corresponding to action 607, the MIMO branch requirements are combined in each of the two groups. Since the spurious emissions requirements are unrelated to the TX power, the most sensible combination is power addition. Thus the combined requirement level is twice the level per MIMO branch.

In the third action, corresponding to action 609, the combined requirement level is distributed to the transceivers and met by the transceivers. For example, the base station 12 may operate with transmission parameters in its radios, e.g. power backoff, Digital Pre-Distortion (DPD) settings etc., that enable the radio to operate without exceeding the emissions limit that has been derived for this configuration. Again, the distribution is based on the transmission power of each of the transceivers:

$$S_i = S_{combined} * \frac{P_i}{\sum_{k=1}^{N} P_k}$$

If an AAS base station has 2 MIMO branches for example and both MIMO branches are driven by the same set of transceivers, the requirement per MIMO branch is doubled. The sum of the spurious emissions from all the transceivers that produce the 2 MIMO branches is required to not exceed the doubled MIMO branch requirement. This act of summation of the two MIMO branch requirements may be the combination function.

Receiver Spurious Emissions

Similar to transmit spurious emissions, a receiver spurious emissions requirement level may be defined per MIMO branch. As such for configurations 1 and 2 embodiments herein operate similarly to transmit spurious emissions.

EVM

An EVM requirement is defined per antenna connector. The EVM requirement is effectively a ratio related to the transmit power of each branch and limits the amount of self-interference.

For the first configuration, in action 606, MIMO branches are grouped. Each MIMO branch forms a separate group. In action 607, MIMO branch requirement levels in each group are combined, however this step is unnecessary since there is only one branch in each group. In action 609, requirements are distributed to transceivers and met by the transceivers. In this case, since the requirement is a defined by a ratio, the distribution function should map 1:1 the combined EVM requirement, $EVM_{combined}$, to each transceiver requirement, $EVM_i$:

$$EVM_i = EVM_{combined}$$

For the second configuration, there are 2 groups; the first group comprising MIMO branch 1 for cell 1 and cell 2 and the second group comprising MIMO branch 2 for cell 1 and cell 2. The EVM requirement required for each MIMO branch should be met. It is possible that the EVM requirements could differ between branches in a group; e.g. because of applying a higher modulation order to an inner cell, that is the cell that is closest to the base station if the splitting is vertical splitting. The combining function should in this case generate a combined requirement level, EVM$_{combined}$, by taking the minimum EVM requirement for the MIMO branches in a group, EVM$_{MIMObranch}$:

$$EVM_{combined} = \min_{AllMIMObranches} \left\{ EVM_{MIMObranch} \right\}$$

The combined requirement is then distributed to the RF transceivers 1006, 1007 that generate each group according to a 1:1 distribution function.

An AAS base station, such as the base station 12, may produce several MIMO branches, each driven by a separate set of transceivers. It is required that the EVM requirement is met at each transceiver involved in a MIMO branch. The base station may achieve this by operating its radios taking into account the requirement derived for this configuration.

Transmit Output Power

The transmitter output power requirement is an accuracy requirement for a declared TX power level. It is conceivable that the accuracy that should be achieved per MIMO branch or transceiver should be related to the branch power or the transceiver power.

The first configuration will be described now. As described above, a requirement group, i.e. the group of MIMO branches sharing the same transceivers, comprises a single MIMO branch. Hence there is no need for a combining function in this case. The group requirement may be distributed to transceivers according to some function of their TX power:

$$A_i = f(P_i, A)$$

A$_i$ is the accuracy requirement for the ith transceiver, P$_i$ is the TX power of the ith transceiver and A is the combined accuracy requirement.

For the second configuration, each group of transceivers comprises 2 MIMO branches; one for each cell. The accuracy requirement should be met for each MIMO branch. In the current 3GPP specifications, the accuracy requirement is the same for all MIMO branches, hence the combining function should take the requirement for a single MIMO branch. Then the distribution function may distribute the requirement to the RF transceivers 1006, 1007 according to some function of the TX power, and then be met by each transceiver:

$$A_i = f(P_i, A)$$

ACLR/Adjacent Channel Selectivity (ACS)

The ACLR requirement is a ratio requirement which defines the ratio of the power transmitted within the assigned channel bandwidth, to the power of the unwanted emissions transmitted on the adjacent channel.

For the first configuration, which comprises only a single MIMO branch for two polarizations, there is no need to apply embodiments herein to the ACLR requirement. Each polarization MIMO beam will have to meet the ACLR requirement individually.

For the second configuration, each MIMO group comprises 2 MIMO branches, one for each cell. The accuracy requirement should be met for each MIMO branch. The combination function may take the requirement for a single MIMO branch. The distribution function may distribute the same requirement to each MIMO branch.

To achieve a corresponding receiver requirement, i.e. an ACS requirement, the node may follow a corresponding method.

Frequency Accuracy

An accumulation of small frequency errors over time may result in timing errors. The current frequency accuracy requirement is applied per antenna port, i.e. per MIMO branch. According to embodiments herein, the RF transceivers 1006, 1007 are grouped and then the frequency accuracy requirement may be applied and met per MIMO group. The frequency accuracy requirement may be applied and met per RF transceiver 1006, 1007, or alternatively may be applied to the average of the frequency errors of the RF transceivers 1006, 1007.

Receiver sensitivity

In the uplink, the concept of MIMO branches is not relevant. However the current receiver (RX) sensitivity requirement is defined across all of the UL antenna connectors. According to embodiments herein, the receiver sensitivity requirement may be divided across the RF transceivers 1006, 1007 receiving UL:

$$R_i = R - 10\log(N)$$

$R_i$ is the RX sensitivity for the ith RF transceiver 1006, 1007. R is the combined RX sensitivity and N is the number of RX RF transceivers 1006, 1007.

Embodiments herein provide a means to demonstrate that an AAS base station operates in such a manner that conducted requirements that the AAS base station meets are equivalent to the existing conducted requirements specification for non AAS base stations. The advantages are then that the existing conducted requirement levels may be re-used, which avoids the need to define new requirements and that base station performance remains consistent.

Embodiments herein involve operating transceivers in a base station such that the transceivers at least meet an individual requirement whose level depends on the following actions:

- Identifying the transceivers that are responsible for generating all of the MIMO branches that are transmitted by the base station.
- Grouping the MIMO branches such that in each group, all MIMO branches in the group are generated from the same set of transceivers.
- For each group, for each RF requirement combining the existing per MIMO branch requirement for each of the MIMO branches in the group using a combining function.
- For each group and each requirement, distributing the combined requirement level identified into individual requirements on each of the transceivers responsible for generating MIMO beams in the group according to a distribution function.

Existing requirements are set per antenna port, and therefore measured and tested towards each antenna port. With multiple MIMO branches in a base station with multiple transceivers such as an AAS base station and with an architecture that would have more transceiver chains than the traditional base station, the method involves operating individual transceivers such that the outputs of the individual transceivers enable meeting the combined requirements on a set of MIMO branches that are generated by means of beamforming. Some requirements such as timing alignment error and frequency error for example do not require to be distributed per MIMO branch. According to some embodiments the method to establish the combined requirements may be performed by designers before design and by test houses when preforming regulatory testing on a design. Transceivers of the base station are then operated to meet combined requirements.

Embodiments herein further relate to a method for achieving equivalent RF requirement levels across a set of multiple RF transceivers of an AAS base station when compared to existing levels for a single transceiver and a non AAS base station.

In order to perform the methods disclosed herein the node for achieving RF requirement levels across the set of RF transceivers 1006, 1007 of the base station 12, is provided. The node is depicted in **Figure 10**. The node may be the base station 12 or a similar node or a test equipment or in a combination, e.g. in an arrangement for handling communication.

The set of RF transceivers 1006, 1007 is configured to generate one or more MIMO branches.

The requirement level may relate to any one or more out of: a spurious emissions requirement, a transmitter power requirement, a receiver sensitivity requirement, an Adjacent Channel Leakage Ratio, ACLR, requirement, an Error Vector Measure, EVM, requirement, a frequency accuracy requirement.

The requirement level may further relate to unwanted emission close the carrier.

In some embodiments a beam of transmit signals generated by the group of MIMO branches is a cell wide beam and/or comprise a common pilot or reference symbol.

In some other embodiments the beam of transmit signals generated by the group of MIMO branches is a user equipment specific beam and/or comprise a common pilot or reference symbol.

The node is configured to group the one or more MIMO branches into groups of MIMO branches, wherein the same set of RF transceivers 1006, 1007 are configured to generate the one or more MIMO branches in each group of MIMO branches.

The node is further configured to generate a combined requirement level by combining a per MIMO branch RF requirement level for the MIMO branches in the group of MIMO branches using a combining function.

The combining function may be any one or more out of: a summation of the requirement levels for each MIMO branch, an average of the requirement levels for each MIMO branch, a maximum or minimum of the requirement levels for each MIMO branch, and a weighted average of the requirement levels for each MIMO branch.

The node is further configured to distribute the combined requirement level into a respective individual RF requirement level for each of the respective RF transceivers 1006, 1007 configured to generate the MIMO branches in the group of MIMO branches according to a distribution function.

In some embodiments the node is configured to distribute the combined requirement level by operating the set of RF transceivers 1006, 1007 in the base station 12 by causing the respective RF transceivers 1006, 1007 to at least meet the respective individual RF requirement level.

The node may further be configured to allocate the combined requirement level to the set of RF transceivers 1006, 1007 by performing any one or more out of:

- dividing the combined requirement level evenly between the respective RF transceivers 1006, 1007 and/or evenly between the respective RF transceivers 1006, 1007 according to the transmit power levels of the respective RF transceivers 1006, 1007,
- allocating the combined requirement level to each of the respective RF transceivers 1006, 1007, and
- requiring that the average or sum of the respective individual RF requirement level for each of the respective RF transceivers 1006, 1007 exceed the combined requirement level.

The node may further be configured to identify the MIMO branches.

In some embodiments the node is configured to identify the RF transceivers 1006, 1007 generating the MIMO branches.

The node may comprise **the processing module 1001** or **the processing circuit 1001** configured to identify the RF transceivers 1006, 1007 that are responsible for generating all of the MIMO branches that are transmitted by the base station.

The node may further comprise **the identifying module 1002** configured to identify the RF transceivers 1006, 1007.

The processing module 1001 may be configured to group the MIMO branches such that in each group, all MIMO branches in the group are generated from the same set of transceivers. The node may comprise **the grouping module 1003** configured to perform the grouping.

The processing module 1001 may be configured to, for each group, for each RF requirement to configure and operate the transceivers such that the combined existing MIMO branch requirement for each of the MIMO branches in the group using a combining function is met. The node may comprise **the module 1004** configured to configure and operate the RF transceivers to meet the combined requirement.

The processing module may be configured to, for each group and each requirement, configure and operate the transceivers such that a distribution of the combined requirement level identified into individual requirements on each of the transceivers responsible for generating MIMO beams in the group according to a distribution function is met. The node may comprise **the module 1005** configured to configure the transceivers to meet the distributed requirements.

The node comprises the RF transceivers 1006, 1007 or the set of RF transceivers 1006, 1007 for beamforming.

The node may further comprise a **memory 1008** that may be configured to store data thereon such as a combined requirement, information of groups of transceivers.

As mentioned above, embodiments herein disclose a node such as the AAS base station or a testing equipment that groups transceivers of the AAS base station, and each group generates one or more beams. The node achieves an equivalent RF requirement at each group of transceivers such that a combination, within each group, of outputs of each of the generated beams is equivalent to a combined requirement, which is defined by a combining function. Furthermore, the node transceiver outputs meet requirements that are distributed, within each group, from the combined requirement across the set of transceivers in that group using a distribution function.

The combining function may be a summation of the requirements for each beam.

The combining function may be an average of the requirements for each beam.

The combining function may be a maximum or minimum of the requirements for each beam.

The combining function may be a weighted average of the requirements of each beam.

The distribution function may divide the combined requirement evenly between transceivers.

The distribution function may divide the combined requirement between transceivers according to their transmit power levels.

The distribution function may allocate the combined requirement to each of the transceivers.

The distribution function may allocate the combined requirement by requiring that the average or sum of the transceiver measurements exceed the combined requirement.

The requirement may be a spurious emissions requirement, a TX power requirement, a receiver sensitivity requirement, an ACLR requirement, an EVM requirement, a frequency accuracy requirement and or the like.

The beams generated by each group may be cell wide beams and/or comprise a common pilot or reference symbol.

The embodiments herein for handling communication may be implemented through one or more processors, being examples of the processing module 1001, in the node, together with computer program code for performing the functions and/or method actions of the embodiments herein. The program code mentioned may also be provided as a **computer program product** 1010, for instance in the form of a data carrier **carrying a computer program 1009** for performing embodiments herein when being loaded into the node. One such carrier may be in the form of a CD ROM disc. It is however feasible with other data carriers such as a memory stick. The computer program code 1009 may furthermore be provided as pure program code on a server and downloaded to the node.

As will be readily understood by those familiar with communications design, that functions from other modules may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a wireless terminal or network node, for example.

Alternatively, several of the functional elements of the modules discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware, read-only memory (ROM) for storing software, random-access memory for storing software and/or program or application data, and non-volatile memory. Other hardware, conventional and/or custom, may also be included. Designers of communications receivers will appreciate the cost, performance, and maintenance trade-offs inherent in these design choices.

When using the word "comprise" or "comprising" it shall be interpreted as non-limiting, i.e. meaning "consist at least of".

Modifications and other embodiments of the disclosed embodiments will come to mind to one skilled in the art having the benefit of the teachings presented in the foregoing descriptions and the associated drawings. Therefore, it is to be understood that the embodiment(s) is/are not to be limited to the specific embodiments disclosed and that modifications and other embodiments are intended to be included within the scope of this disclosure. Although specific terms may be employed herein, they are used in a generic and descriptive sense only and not for purposes of limitation.

Therefore, the above embodiments should not be taken as limiting the scope, which is defined by the appending claims.

Note that although terminology from 3GPP LTE/SAE has been used in this disclosure to exemplify the embodiments herein, this should not be seen as limiting the scope of the embodiments herein to only the aforementioned system. Other wireless systems may also benefit from exploiting the ideas covered within this disclosure.

Also note that terminology such as a first network node and a second network node should be considered to be non-limiting and does in particular not imply a certain hierarchical relation between the two.

## Claims

1. A method in a node (12) for achieving Radio Frequency, RF, requirement levels across a set of RF transceivers (1006, 1007) of a base station (12), wherein the set of RF transceivers (1006, 1007) generates one or more Multiple-Input Multiple-Output, MIMO, branches, the method comprising:

    grouping (606) the one or more MIMO branches into groups of MIMO branches, wherein the one or more MIMO branches in each group of MIMO branches are generated from the same set of RF transceivers (1006, 1007), the method being **characterized by**:
    generating a combined requirement level by *combining* (607) a per MIMO branch RF requirement level for the MIMO branches in a group of MIMO branches using a combining function, and
    *distributing* (609) the combined requirement level for the group of MIMO branches into a respective individual RF requirement level for each of the respective RF transceivers (1006, 1007), responsible for generating the MIMO branches in the group of MIMO branches, according to a distribution function, and

operating the set of RF transceivers (1006, 1007) by causing the output of the respective RF transceivers (1006, 1007) to at least meet the respective individual RF requirement level.

2. The method according to claim 1, further comprising *identifying* (605) the MIMO branches.

3. The method according to any of the claims 1-2, further comprising *identifying* (608) the RF transceivers (1006, 1007) generating the MIMO branches.

4. The method according to any of the claims 1-3, wherein the combining function is any one or more out of: a summation of the requirement levels for each MIMO branch, an average of the requirement levels for each MIMO branch, a maximum or minimum of the requirement levels for each MIMO branch, and a weighted average of the requirement levels for each MIMO branch.

5. The method according to any of the claims 1-4, wherein the distribution function allocates the combined requirement level to the set of RF transceivers (1006, 1007) by performing any one or more out of:

- dividing the combined requirement level evenly between the respective RF transceivers (1006, 1007) and/or evenly between the respective RF transceivers (1006, 1007) according to the transmit power levels of the respective RF transceivers (1006, 1007),
- allocating the combined requirement level to each of the respective RF transceivers (1006, 1007), and
- requiring that the average or sum of the respective individual RF requirement level for each of the respective RF transceivers (1006, 1007) exceed the combined requirement level.

6. The method according to any of the claims 1-5, wherein the requirement level relates to any one or more out of: a spurious emissions requirement, a transmitter power requirement, a receiver sensitivity requirement, an Adjacent Channel Leakage Ratio, ACLR, requirement, an Error Vector Measure, EVM, requirement, a frequency accuracy requirement.

7. The method according to any of the claims 1-6, wherein the requirement level relates to unwanted emission close the carrier.

8. The method according to any of the claims 1-7, wherein a beam of transmit signals generated by the group of MIMO branches is a cell wide beam and/or comprise a common pilot or reference symbol.

9. The method according to any of the claims 1-8, wherein a beam of transmit signals generated by the group of MIMO branches is a user equipment specific beam and/or comprise a common pilot or reference symbol.

10. A node (12) for achieving Radio Frequency, RF, requirement levels across a set of RF transceivers (1006, 1007) of a base station (12), wherein the set of RF transceivers (1006, 1007) is configured to generate one or more Multiple-Input Multiple-Output, MIMO, branches, the node (12) being configured to: group the one or more MIMO branches into groups of MIMO branches, wherein the same set of RF transceivers (1006, 1007) are configured to generate the one or more MIMO branches in each group of MIMO branches, the node being **characterized by** further being configured to: generate a combined requirement level by combining a per MIMO branch RF requirement level for the MIMO branches in a group of MIMO branches using a combining function,
distribute the combined requirement level into a respective individual RF requirement level for each of the respective RF transceivers (1006, 1007) configured to generate the MIMO branches in the group of MIMO branches according to a distribution function, and
operate the set of RF transceivers (1006, 1007) in the base station (12) by causing the output of the respective RF transceivers (1006, 1007) to at least meet the respective individual RF requirement level.

11. The node (12) according to claim 10, further configured to identify the MIMO branches.

12. The node (12) according to any of the claims 10-11, further configured to identify the RF transceivers (1006, 1007) generating the MIMO branches.

13. The node (12) according to any of the claims 10-12, wherein the combining function is any one or more out of: a summation of the requirement levels for each MIMO branch, an average of the requirement levels for each MIMO branch, a maximum or minimum of the requirement levels for each MIMO branch, and a weighted average of the requirement levels for each MIMO branch.

14. The node (12) according to any of the claims 10-13, further configured to allocate the combined requirement level to the set of RF transceivers (1006, 1007) by performing any one or more out of:

- dividing the combined requirement level evenly between the respective RF transceivers (1006, 1007) and/or evenly between the respective RF transceivers (1006, 1007) according to the transmit power levels of the respective RF transceivers (1006, 1007),
- allocating the combined requirement level to each of the respective RF transceivers (1006, 1007), and
- requiring that the average or sum of the respective individual RF requirement level for each of the respective RF transceivers (1006, 1007) exceed the combined requirement level.

15. The node (12) according to any of the claims 10-14, wherein the requirement level relates to any one or more out of: a spurious emissions requirement, a transmitter power requirement, a receiver sensitivity requirement, an Adjacent Channel Leakage Ratio, ACLR, requirement, an Error Vector Measure, EVM, requirement, a frequency accuracy requirement.

16. The node (12) according to any of the claims 10-14, wherein the requirement level relates to unwanted emission close the carrier.

17. The node (12) according to any of the claims 10-16, wherein a beam of transmit signals generated by the group of MIMO branches is a cell wide beam and/or comprise a common pilot or reference symbol.

18. The node (12) according to any of the claims 10-16, wherein a beam of transmit signals generated by the group of MIMO branches is a user equipment specific beam and/or comprise a common pilot or reference symbol.

**Patentansprüche**

1. Verfahren in einem Knoten (12) zum Erreichen von Hochfrequenz-,HF-,Anforderungspegeln über einen Satz von HF-Sendeempfänger (1006, 1007) einer Basisstation (12), wobei der Satz von HF-Sendeempfängern (1006, 1007) einen oder mehrere Mehrfacheingangs-Mehrfachausgangs-,MIMO,-Zweige erzeugt, wobei das Verfahren umfasst: Einteilen (606) des einen oder der mehreren MIMO-Zweige in Gruppen von MIMO-Zweigen, wobei der eine oder die mehreren MIMO-Zweige in jeder Gruppe von MIMO-Zweigen vom gleichen Satz von HF-Sendeempfängern (1006, 1007) erzeugt werden, wobei das Verfahren **gekennzeichnet ist durch**:

Erzeugen eines kombinierten Anforderungspegels **durch** Kombinieren (607) eines Pro-MIMO-Zweig-HF-Anforderungspegels für die MIMO-Zweige in einer Gruppe von MIMO-Zweigen unter Verwendung einer Kombinierfunktion, und
Verteilen (609) des kombinierten Anforderungspegels für die Gruppe von MIMO-Zweigen in einen jeweiligen individuellen HF-Anforderungspegel für jeden der jeweiligen HF-Sendeempfänger (1006, 1007), der für das Erzeugen der MIMO-Zweige in der Gruppe von MIMO-Zweigen verantwortlich ist, gemäß einer Verteilungsfunktion, und
Betreiben des Satzes von HF-Sendeempfängern (1006, 1007) **durch** Bewirken, dass die Ausgabe der jeweiligen HF-Sendeempfänger (1006, 1007) wenigstens dem jeweiligen individuellen HF-Anforderungspegel entspricht.

2. Verfahren nach Anspruch 1, ferner umfassend ein Identifizieren (605) der MIMO-Zweige.

3. Verfahren nach einem der Ansprüche 1 bis 2, ferner umfassend ein Identifizieren (608) der HF-Sendeempfänger (1006, 1007), welche die MIMO-Zweige erzeugen.

4. Verfahren nach einem der Ansprüche 1 bis 3, wobei es sich bei der Kombinierfunktion um eines oder mehrere handelt von: einer Summierung der Anforderungspegel für jeden MIMO-Zweig, einem Mittel der Anforderungspegel für jeden MIMO-Zweig, einem Maximum oder Minimum der Anforderungspegel für jeden MIMO-Zweig und einem gewichteten Mittel der Anforderungspegel für jeden MIMO-Zweig.

5. Verfahren nach einem der Ansprüche 1 bis 4, wobei die Verteilungsfunktion den kombinierten Anforderungspegel dem Satz von Sendeempfängern (1006, 1007) zuweist durch Durchführen von einem oder mehreren von:

- Aufteilen des kombinierten Anforderungspegels gleichmäßig zwischen den jeweiligen HF-Sendeempfängern (1006, 1007) und/oder gleichmäßig zwischen den jeweiligen HF-Sendeempfängern (1006, 1007) gemäß den Sendeleistungspegeln der jeweiligen HF-Sendeempfänger (1006, 1007),
- Zuweisen des kombinierten Anforderungspegels zu jedem der jeweiligen HF-Sendeempfänger (1006, 1007), und
- Anfordern, dass das Mittel oder die Summe der jeweiligen individuellen HF-Anforderungspegel für jeden der jeweiligen HF-Sendeempfänger (1006, 1007) den kombinierten Anforderungspegel überschreitet.

6. Verfahren nach einem der Ansprüche 1 bis 5, wobei der Anforderungspegel sich auf eines oder mehrere bezieht von: einer Anforderung hinsichtlich Störemissionen, einer Anforderung hinsichtlich Senderleistung, einer Anforderung hinsichtlich Empfängerempfindlichkeit, einer Anforderung hinsichtlich eines Nachbarkanalverlustverhältnisses, ACLR, einer Anforderung hinsichtlich eines Fehlervektormaßes, EVM, einer Anforderung hinsichtlich Frequenzgenauigkeit.

7. Verfahren nach einem der Ansprüche 1 bis 6, wobei der Anforderungspegel mit unerwünschter Emission in der Nähe des Trägers in Beziehung steht.

8. Verfahren nach einem der Ansprüche 1 bis 7, wobei ein Strahl von Sendesignalen, die von der Gruppe von MIMO-Zweigen erzeugt werden, ein zellweiter Strahl ist und/oder ein gemeinsames Pilot- oder Referenzsymbol umfasst.

9. Verfahren nach einem der Ansprüche 1 bis 8, wobei ein Strahl von Sendesignalen, die von der Gruppe von MIMO-Zweigen erzeugt werden, ein benutzereinrichtungsspezifischer Strahl ist und/oder ein gemeinsames Pilot- oder Referenzsymbol umfasst.

10. Knoten (12) zum Erreichen von Hochfrequenz-,HF-,Anforderungspegeln über einen Satz von HF-Sendeempfänger (1006, 1007) einer Basisstation (12), wobei der Satz von HF-Sendeempfängern (1006, 1007) zum Erzeugen eines oder mehrerer Mehrfacheingangs-Mehrfachausgangs-,MIMO,-Zweige konfiguriert, wobei der Knoten (12) konfiguriert ist zum:
Einteilen des einen oder der mehreren MIMO-Zweige in Gruppen von MIMO-Zweigen, wobei der gleiche Satz von HF-Sendeempfängern (1006, 1007) zum Erzeugen des einen oder der mehreren MIMO-Zweige in jeder Gruppe von MIMO-Zweigen konfiguriert ist, wobei der Knoten **dadurch gekennzeichnet ist, dass** er konfiguriert ist zum:

Erzeugen eines kombinierten Anforderungspegels durch Kombinieren eines Pro-MIMO-Zweig-HF-Anforderungspegels für die MIMO-Zweige in einer Gruppe von MIMO-Zweigen unter Verwendung einer Kombinierfunktion,
Verteilen des kombinierten Anforderungspegels in einen jeweiligen individuellen HF-Anforderungspegel für jeden der jeweiligen HF-Sendeempfänger (1006, 1007), der zum Erzeugen der MIMO-Zweige in der Gruppe von MIMO-Zweigen konfiguriert ist, gemäß einer Verteilungsfunktion, und
Betreiben des Satzes von HF-Sendeempfängern (1006, 1007) in der Basisstation (12) durch Bewirken, dass die Ausgabe der jeweiligen HF-Sendeempfänger (1006, 1007) wenigstens dem jeweiligen individuellen HF-Anforderungspegel entspricht.

11. Knoten (12) nach Anspruch 10, ferner konfiguriert zum Identifizieren der MIMO-Zweige.

12. Knoten (12) nach einem der Ansprüche 10 bis 11, ferner konfiguriert zum Identifizieren der HF-Sendeempfänger (1006, 1007), welche die MIMO-Zweige erzeugen.

13. Knoten (12) nach einem der Ansprüche 10 bis 12, wobei es sich bei der Kombinierfunktion um eines oder mehrere handelt von: einer Summierung der Anforderungspegel für jeden MIMO-Zweig, einem Mittel der Anforderungspegel für jeden MIMO-Zweig, einem Maximum oder Minimum der Anforderungspegel für jeden MIMO-Zweig und einem gewichteten Mittel der Anforderungspegel für jeden MIMO-Zweig.

14. Knoten (12) nach einem der Ansprüche 10 bis 13, ferner konfiguriert zum Zuweisen des kombinierten Anforderungspegels zum Satz von Sendeempfängern (1006, 1007) durch Durchführen von einem oder mehreren von:

- Aufteilen des kombinierten Anforderungspegels gleichmäßig zwischen den jeweiligen HF-Sendeempfängern (1006, 1007) und/oder gleichmäßig zwischen den jeweiligen HF-Sendeempfängern (1006, 1007) gemäß den Sendeleistungspegeln der jeweiligen HF-Sendeempfänger (1006, 1007),

- Zuweisen des kombinierten Anforderungspegels zu jedem der jeweiligen HF-Sendeempfänger (1006, 1007), und
- Anfordern, dass das Mittel oder die Summe der jeweiligen individuellen HF-Anforderungspegel für jeden der jeweiligen HF-Sendeempfänger (1006, 1007) den kombinierten Anforderungspegel überschreitet.

15. Knoten (12) nach einem der Ansprüche 10 bis 14, wobei der Anforderungspegel sich auf eines oder mehrere bezieht von: einer Anforderung hinsichtlich Störemissionen, einer Anforderung hinsichtlich Senderleistung, einer Anforderung hinsichtlich Empfängerempfindlichkeit, einer Anforderung hinsichtlich eines Nachbarkanalverlustverhältnisses, ACLR, einer Anforderung hinsichtlich eines Fehlervektormaßes, EVM, einer Anforderung hinsichtlich Frequenzgenauigkeit.

16. Knoten (12) nach einem der Ansprüche 10 bis 14, wobei der Anforderungspegel mit unerwünschter Emission in der Nähe des Trägers in Beziehung steht.

17. Knoten (12) nach einem der Ansprüche 10 bis 16, wobei ein Strahl von Sendesignalen, die von der Gruppe von MIMO-Zweigen erzeugt werden, ein zellweiter Strahl ist und/oder ein gemeinsames Pilot- oder Referenzsymbol umfasst.

18. Knoten (12) nach einem der Ansprüche 10 bis 16, wobei ein Strahl von Sendesignalen, die von der Gruppe von MIMO-Zweigen erzeugt werden, ein benutzereinrichtungsspezifischer Strahl ist und/oder ein gemeinsames Pilot- oder Referenzsymbol umfasst.

**Revendications**

1. Procédé dans un nœud (12) pour atteindre des niveaux d'exigence de radiofréquences, RF, à travers un ensemble d'émetteurs-récepteurs RF (1006, 1007) d'une station de base (12), dans lequel l'ensemble d'émetteurs-récepteurs RF (1006, 1007) génère une ou plusieurs branches d'entrées multiples et de sorties multiples, MIMO, le procédé comprenant :

le regroupement (606) des une ou plusieurs branches MIMO dans des groupes de branches MIMO, dans lequel les une ou plusieurs branches MIMO dans chaque groupe de branches MIMO sont générées à partir du même ensemble d'émetteurs-récepteurs RF (1006, 1007), le procédé étant **caractérisé par** :

la génération d'un niveau d'exigence combiné par la combinaison (607) d'un niveau d'exigence RF par branche MIMO pour les branches MIMO dans un groupe de branches MIMO en utilisant une fonction de combinaison, et la distribution (609) du niveau d'exigence combiné pour le groupe de branches MIMO dans un niveau d'exigence RF individuel respectif pour chacun des émetteurs-récepteurs RF (1006, 1007) respectifs, responsable de la génération des branches MIMO dans le groupe de branches MIMO, selon une fonction de distribution, et l'exploitation de l'ensemble d'émetteurs-récepteurs RF (1006, 1007) en amenant la sortie des émetteurs-récepteurs RF (1006, 1007) respectifs à au moins satisfaire le niveau d'exigence RF individuel respectif.

2. Procédé selon la revendication 1, comprenant en outre l'identification (605) des branches MIMO.

3. Procédé selon la revendication 1 ou 2, comprenant en outre l'identification (608) des émetteurs-récepteurs RF (1006, 1007) générant les branches MIMO.

4. Procédé selon l'une quelconque des revendications 1 à 3, dans lequel la fonction de combinaison est l'une quelconque ou plusieurs parmi : une sommation des niveaux d'exigence pour chaque branche MIMO, une moyenne des niveaux d'exigence pour chaque branche MIMO, un maximum ou un minimum des niveaux d'exigence pour chaque branche MIMO, et une moyenne pondérée des niveaux d'exigence pour chaque branche MIMO.

5. Procédé selon l'une quelconque des revendications 1 à 4, dans lequel la fonction de distribution alloue le niveau d'exigence combiné à l'ensemble d'émetteurs-récepteurs RF (1006, 1007) en réalisant l'une quelconque ou plusieurs parmi :

- la division du niveau d'exigence combiné uniformément entre les émetteurs-récepteurs RF (1006, 1007) respectifs et/ou uniformément entre les émetteurs-récepteurs RF (1006, 1007) respectifs en fonction des niveaux de puissance de transmission des émetteurs-récepteurs RF (1006, 1007) respectifs,

- l'allocation du niveau d'exigence combiné à chacun des émetteurs-récepteurs RF (1006, 1007) respectifs, et
- l'exigence que la moyenne ou la somme du niveau d'exigence RF individuel respectif pour chacun des émetteurs-récepteurs RF (1006, 1007) respectifs dépasse le niveau d'exigence combiné.

6. Procédé selon l'une quelconque des revendications 1 à 5, dans lequel le niveau d'exigence concerne l'une quelconque ou plusieurs parmi : une exigence d'émissions parasites, une exigence de puissance d'émetteur, une exigence de sensibilité de récepteur, une exigence de rapport de fuite de canaux adjacents, ACLR, une exigence de mesure de vecteur d'erreur, EVM, une exigence de précision de fréquence.

7. Procédé selon l'une quelconque des revendications 1 à 6, dans lequel le niveau d'exigence concerne une émission indésirable à proximité de la porteuse.

8. Procédé selon l'une quelconque des revendications 1 à 7, dans lequel un faisceau de signaux de transmission générés par le groupe de branches MIMO est un faisceau de taille cellulaire et/ou comprend un symbole de pilote ou de référence commun.

9. Procédé selon l'une quelconque des revendications 1 à 8, dans lequel un faisceau de signaux de transmission générés par le groupe de branches MIMO est un faisceau spécifique à l'équipement d'utilisateur et/ou comprend un symbole de pilote ou de référence commun.

10. Nœud (12) pour atteindre des niveaux d'exigence de radiofréquences, RF, à travers un ensemble d'émetteurs-récepteurs RF (1006, 1007) d'une station de base (12), dans lequel l'ensemble d'émetteurs-récepteurs RF (1006, 1007) est configuré pour générer une ou plusieurs branches d'entrées multiples et de sorties multiples, MIMO, le nœud (12) étant configuré pour :
le regroupement des une ou plusieurs branches MIMO dans des groupes de branches MIMO, dans lequel le même ensemble d'émetteurs-récepteurs RF (1006, 1007) est configuré pour la génération des une ou plusieurs branches MIMO dans chaque groupe de branches MIMO, le nœud étant **caractérisé en ce qu'**il est en outre configuré pour :

la génération d'un niveau d'exigence combiné par la combinaison d'un niveau d'exigence RF par branche MIMO pour les branches MIMO dans un groupe de branches MIMO en utilisant une fonction de combinaison,
la distribution du niveau d'exigence combiné dans un niveau d'exigence RF individuel respectif pour chacun des émetteurs-récepteurs RF (1006, 1007) respectifs configurés pour la génération des branches MIMO dans le groupe de branches MIMO selon une fonction de distribution, et
l'exploitation de l'ensemble d'émetteurs-récepteurs RF (1006, 1007) dans la station de base (12) en amenant la sortie des émetteurs-récepteurs RF (1006, 1007) respectifs à au moins satisfaire le niveau d'exigence RF individuel respectif.

11. Nœud (12) selon la revendication 10, en outre configuré pour l'identification des branches MIMO.

12. Nœud (12) selon la revendication 10 ou 11, en outre configuré pour l'identification des émetteurs-récepteurs RF (1006, 1007) générant les branches MIMO.

13. Nœud (12) selon l'une quelconque des revendications 10 à 12, dans lequel la fonction de combinaison est l'une quelconque ou plusieurs parmi : une sommation des niveaux d'exigence pour chaque branche MIMO, une moyenne des niveaux d'exigence pour chaque branche MIMO, un maximum ou un minimum des niveaux d'exigence pour chaque branche MIMO, et une moyenne pondérée des niveaux d'exigence pour chaque branche MIMO.

14. Nœud (12) selon l'une quelconque des revendications 10 à 13, en outre configuré pour l'allocation du niveau d'exigence combiné à l'ensemble d'émetteurs-récepteurs RF (1006, 1007) en réalisant l'une quelconque ou plusieurs parmi :

- la division du niveau d'exigence combiné uniformément entre les émetteurs-récepteurs RF (1006, 1007) respectifs et/ou uniformément entre les émetteurs-récepteurs RF (1006, 1007) respectifs en fonction des niveaux de puissance de transmission des émetteurs-récepteurs RF (1006, 1007) respectifs,
- l'allocation du niveau d'exigence combiné à chacun des émetteurs-récepteurs RF (1006, 1007) respectifs, et
- l'exigence que la moyenne ou la somme du niveau d'exigence RF individuel respectif pour chacun des émetteurs-récepteurs RF (1006, 1007) respectifs dépasse le niveau d'exigence combiné.

**15.** Nœud (12) selon l'une quelconque des revendications 10 à 14, dans lequel le niveau d'exigence concerne l'une quelconque ou plusieurs parmi : une exigence d'émissions parasites, une exigence de puissance d'émetteur, une exigence de sensibilité de récepteur, une exigence de rapport de fuite de canaux adjacents, ACLR, une exigence de mesure de vecteur d'erreur, EVM, une exigence de précision de fréquence.

**16.** Nœud (12) selon l'une quelconque des revendications 10 à 14, dans lequel le niveau d'exigence concerne une émission indésirable à proximité de la porteuse.

**17.** Nœud (12) selon l'une quelconque des revendications 10 à 16, dans lequel un faisceau de signaux de transmission générés par le groupe de branches MIMO est un faisceau de taille cellulaire et/ou comprend un symbole de pilote ou de référence commun.

**18.** Nœud (12) selon l'une quelconque des revendications 10 à 16, dans lequel un faisceau de signaux de transmission générés par le groupe de branches MIMO est un faisceau spécifique à l'équipement d'utilisateur et/ou comprend un symbole de pilote ou de référence commun.

Fig. 1

Fig. 2

Fig. 3

Antenna Ports (aka Baseband ports)     Antenna Reference Point (aka Transceiver Boundary)    100

Baseband    Cell Specific Beam-forming    Transceiver Array    Radio Distribution Network    Antenna Array

DL Baseband — TX Data — 36.211 / 36.213

DL Port-Expansion — W

Transmitter Array

Passive BF

DL AE 1, DL AE 2, DL AE $N_{p_1}$

UL Baseband — RX Data

UL Port-Reduction — W

Receiver Array

Passive BF

UL AE 1, UL AE 2, UL AE $N_{p_2}$

EP 3 095 202 B1

Antenna array

Far Field Boundary

Fig. 4

Fig. 5

601. Determine AAS Declared Base station

602. Apply 3GPP Spec. Requirement

604. Apply Conducted requirement/measurement

603. Apply Radiated requirement/ measurement

605. Identify MIMO branches

606. Group MIMO function

607. Apply Combination Function

608. Identify transceiver branches

609. Distribution /Mapping function

Fig. 6

MIMO branch 1

Second set of ten RF
transceivers = Dashed
line MIMO
transceivers

710

MIMO branch 2

First set of ten RF
transceivers = Full line
MIMO transceivers

| TRX | ✕ | TRX |
| TRX | ✕ | TRX |
| TRX | ✕ | TRX |
| TRX | ✕ | TRX |
| TRX | ✕ | TRX |
| TRX | ✕ | TRX |
| TRX | ✕ | TRX |
| TRX | ✕ | TRX |
| TRX | ✕ | TRX |
| TRX | ✕ | TRX |

730

720

Fig. 7

Fig. 8

MIMO
beams 1&2
for cell 1

MIMO
beams 1&2
for cell 2

12

Fig. 9

12 Node

1009

1010

1008.
Memory

1006.
Transceiver

1007.
Transceiver

10

1002. Identifying module

1003. Grouping module

1004. Combined requirements module.

1005. Distributed requirements module

1001. Processing module or circuit(s)

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HUAWEI.** Further consideration of the virtual transceiver for AAS BS. *3GPP draft R4-133714,* 12 August 2013

- **HUAWEI.** AAS Ad hoc. *3GPP draft R4-133089,* 27 May 2013